# EUROPÄISCHE PATENTSCHRIFT

(11) **EP 3 174 833 B1**
(45) Veröffentlichungstag und Bekanntmachung des Hinweises auf die Patenterteilung: **12.12.2018**
(21) Anmeldenummer: 15725528.2
(22) Anmeldetag: 12.05.2015
(51) Int. Cl.: C02F 1/78, C02F 3/06

(54) **REGELUNGSVERFAHREN UND -VORRICHTUNG FÜR EINE WASSERBEHANDLUNG**
REGULATING METHOD AND REGULATING DEVICE FOR WATER TREATMENT
PROCÉDÉ ET DISPOSITIF DE RÉGLAGE POUR UN TRAITEMENT DE L'EAU

(30) Priorität: 28.07.2014 DE 102014010946
(43) Veröffentlichungstag der Anmeldung: 07.06.2017
(73) Patentinhaber: Xylem IP Management S.à.r.l., 1259 Senningerberg (LU)
(72) Erfinder: RIED, Achim, 32549 Bad Oeynhausen (DE); WIELAND, Arne, 32423 Minden (DE); ZHU, Ivan, Cranberry Township, Pennsylvania 16066 (US)
(74) Vertreter: Lenzing Gerber Stute
(86) Internationale Anmeldenummer: PCT/EP2015/060448
(87) Internationale Veröffentlichungsnummer: WO 2016/015888

(56) Entgegenhaltungen:
- WO-A1-2014/186167
- JP-A- H04 225 896
- JP-A- 2005 324 124
- US-A1- 2002 104 787
- HENDERSON R K ET AL: "Fluorescence as a potential monitoring tool for recycled water systems: A review", WATER RESEARCH, ELSEVIER, AMSTERDAM, NL, Bd. 43, Nr. 4, 1. März 2009 (2009-03-01), Seiten 863-881, XP025962084, ISSN: 0043-1354, DOI: 10.1016/J.WATRES.2008.11.027 [gefunden am 2008-12-03]

## Beschreibung

Die vorliegende Erfindung betrifft ein Verfahren und eine Vorrichtung zur Regelung einer Wasserbehandlungsanlage mit den Merkmalen des Anspruchs 1 und des Anspruchs 10.

In der Abwasserbehandlung und Trinkwasseraufbereitung spielt neben der Desinfektion, der Reduzierung von Desinfektionsnebenprodukten, der Entfernung von Stickstoff und Phosphor und der Elimination von Geruchs- und Geschmacksstoffen die Elimination von Mikroverunreinigungen eine wachsende Rolle.

Unter Mikroverunreinigungen versteht man organische Substanzen, welche in Gewässern in Konzentrationen im Bereich von wenigen Nano- bis Mikrogramm pro Liter vorkommen und die bereits in diesen Konzentrationen den Ablauf grundlegender biochemischer Prozesse in der Natur beeinflussen können. Darunter fallen einerseits viele synthetische Substanzen wie Arzneimittelstoffe, Stoffe mit bioziden Eigenschaften, Lebensmittelzusatzstoffe, Inhaltstoffe von Kosmetika oder Reinigungsmittel, etc., aber auch Stoffe natürlichen Ursprungs wie beispielsweise Hormone.

Die US 2012/0080374 A1 offenbart ein Verfahren zur Wasserbehandlung in dem Mikroverunreinigungen mit einer Ozonung und anschließenden Bioreaktoren zu einem großen Teil entfernt oder in unproblematische Produkte umgewandelt werden. Eine Regelung des Verfahrens ist nicht beschrieben.

Aus der DE 43 08 159 A1 ist ein Verfahren zum Abbau der CSB (chemischen Sauerstoffbedarfs)-Belastung in Abwasser bekannt, bei dem vor einem biologischen Filter ein Oxidationsschritt mit Ozon vorgeschaltet ist. Die Oxidation durch Ozon führt zum Großteil zu einem direkten Abbau der CSB-Belastung und das verbleibende CSB wird durch das reaktive Ozon in seiner Struktur verändert, so dass es von dem biologischen Filter abbaubar ist. Auch hier ist eine Regelung der Abwasserbehandlung nicht offenbart.

Die WO 2014/025478 A1 offenbart ein Verfahren zur Regelung einer Abwasserbehandlungsanlage aufweisend eine Ozonung und einen biologischen Filter. Im Ablauf nach dem Filter wird mittels eines Sensors, der die spektrale Absorption von elektromagnetischer Strahlung im UV-Spektrum und/oder im sichtbaren Spektrum erfasst, der TOC (gesamte organische Kohlenstoff) des Abwassers und mittels einer weiteren Messung des Oxidations-/Reduktionspotential gemessen. Anhand dieser beiden Werte wird die Ozonzufuhr und wenn nötig die Sauerstoffzufuhr des biologischen Filters nach geregelt, um die gewünschte Wasserqualität zu erhalten.

Die JP 2005-324124 beschreibt ein Regelungsverfahren für die Ozonung von Wasser in dem Fluoreszenzsensoren verwendet werden.

Ein großer Kostenfaktor der zuvor genannten Anlagenkombination aus Ozonung und biologischen Filtern ist der Energieverbrauch des Ozongenerators sowie die Sauerstoffproduktion. Der Ozoneintrag sollte somit so gesteuert werden, dass jeweils nur die für das Reinigungsziel notwendige Ozonmenge hergestellt und eingetragen wird. Weitere Betriebskosten beeinflussende Faktoren liegen im Betrieb des biologisch aktiven Filters (Rückspülintervalle). Daher ist es wünschenswert bezüglich einer Optimierung der Kosten, die Anlagenkombination möglichst effizient zu betreiben.

Es ist Aufgabe der vorliegenden Erfindung, ein Verfahren und eine Vorrichtung zur Regelung einer Wasserbehandlungsanlage anzugeben, die möglichst kosteneffizient die gewünschte Wasserqualität erreichen.

Diese Aufgabe wird von einem Verfahren mit den Merkmalen des Anspruchs 1 und einer Vorrichtung mit den Merkmalen des Anspruchs 10 gelöst.

Danach ist ein Verfahren zur Regelung einer Wasserbehandlungsanlage mit einem Zulauf, einer Ozonungsstufe, einer Transferstufe, wenigstens einem biologischen Filter und einem Ablauf, mit folgenden Verfahrensschritten vorgesehen:
Messen eines ersten Parametersatzes in dem Zulauf mittels eines Fluoreszenzsensors oder UV/Vis-Sensors, wobei anhand des ersten Parametersatzes ein Maß für eine erste Konzentration an Mikroverunreinigungen und/oder eine Nitritkonzentration bestimmt wird; Steuern der Ozonungsstufe derart, dass eine Ozoneinspeisung in einem vorgewählten Verhältnis zu dem gemessenen ersten Parametersatz erfolgt; Messen eines zweiten Parametersatzes in der Transferstufe mittels eines Fluoreszenzsensors oder UV/Vis-Sensors, wobei anhand des zweiten Parametersatzes ein Maß für eine zweite Konzentration an Mikroverunreinigungen bestimmt wird; Regeln der Ozonung derart, dass sich der Quotient aus der Differenz der ersten Konzentration an Mikroverunreinigungen und der zweiten Konzentration an Mikroverunreinigungen im Verhältnis zu der ersten Konzentration an Mikroverunreinigungen zwischen einem vorgegebenen Minimalwert und einem vorgegebenen Maximalwert einstellt; Messen eines dritten Parametersatzes in dem Ablauf mittels eines Fluoreszenzsensors oder UV/Vis-Sensors, wobei anhand des dritten Parametersatzes ein Maß für eine dritte Konzentration an Mikroverunreinigungen bestimmt wird; Wenn der dritte das Maß für die Konzentration an Mikroverunreinigungen umfassende Parametersatz im Ablauf einen vorgegebenen Maximalwert überschreitet, Erhöhen der Ozonzufuhr.

Durch dieses Verfahren wird die gewünschte Reduktion an Mikroverunreinigungen im Wasser bei kosteneffizienter Ozonzufuhr erzielt.

Vorzugsweise wird anhand des zweiten und dritten Parametersatzes jeweils eine Konzentration an organischen Wasserinhaltstoffen bestimmt, aus denen die Differenz als Differenz aus den organischen Wasserinhaltstoffen in der Transferstufe und den organischen Wasserinhaltstoffen im Ablauf berechnet wird, wobei ein Reinigungsschritt für den biologischen Filter durchgeführt wird, wenn der Quotient einen vorgegebenen Mindestwert unterschreitet. Durch diesen Regelungsschritt wird die Effizienz des Filters überwacht und gegebenenfalls ein Reinigungsschritt initiiert.

In einer vorteilhaften Ausführungsform sind alle Sensoren UV/Vis-Sensoren, die als Parametersatz ein UV/Vis-Absorptionsspektrum aufnehmen.

Dabei ist es bevorzugt, wenn der Parametersatz das UV/Vis-Absorptionsspektrum im Bereich von 200-700 nm umfasst.

Im ersten Schritt der Regelung wird bevorzugt zusätzlich die Nitritkonzentration gemessen, wobei die Ozonung so gesteuert wird, dass dem Abwasserstrom in der Ozonung wenigstens eine der Nitritmenge entsprechende Ozonmenge im Verhältnis 1:1 zugegeben wird.

Vorzugsweise wird die Konzentration an organischen Wasserinhaltstoffen als TOC-Wert gemessen. Der TOC-Wert ist ein Maß für die Verunreinigung des Wassers durch den gesamten organischen Kohlenstoff.

Weiterhin bevorzugt wird anhand des zweiten Parametersatzes die gelöste Ozonmenge im Wasser bestimmt, wobei die Ozonzufuhr der Ozonung reduziert wird, wenn die gelöste Ozonmenge einen vorgegebenen Maximalwert überschreitet. Durch diesen Schritt kann die Ozonzufuhr nachgeregelt werden, so dass eine unnötige Überdosierung von Ozon verhindert werden kann.

Vorzugsweise wird das Maß für die Konzentration an Mikroverunreinigungen anhand wenigstens eines Wertes ausgewählt aus der Gruppe, die TOC, DOC und CSB umfasst, bestimmt. Wobei CSB ein Maß für den chemischen Sauerstoffbedarf und DOC ein Maß für die gelösten organischen Stoffe ist. Die Mikroverunreinigungen können nicht direkt durch die UV/Vis- Absorptionsmessung nachgewiesen werden. Das Absorptionsspektrum wird in Abhängigkeit der Mikroverunreinigungen charakterisiert und eine Umsetzungstabelle erstellt. Dazu werden die Mikroverunreinigungen offline gemessen. Anhand dieser Umsetzungstabellen wird das Maß der Mikroverunreinigung online durch Auswertung des Absorptionsspektrums bestimmt. Dabei kann die Korrelation zum Beispiel anhand bekannter Parameter wie TOC, DOC, CSB erfolgen.

In einer bevorzugten Ausführungsform handelt es sich bei der Wasserbehandlungsanlage um eine Abwasserbehandlungsanlage für kommunale Abwässer.

Weiterhin ist eine Vorrichtung zur Regelung einer Wasserbehandlungsanlage mit einem Zulauf, einer Ozonungsstufe, einer Transferstufe, wenigstens einem biologischen Filter und einem Ablauf, vorgesehen, wobei die Vorrichtung einen ersten Fluoreszenzsensor oder UV/Vis-Sensor in dem Zulauf aufweist, der einen ersten Parametersatz misst, wobei der erste Parametersatz ein Maß für eine erste Konzentration an Mikroverunreinigungen und/oder eine Nitritkonzentration umfasst, und einen zweiten Fluoreszenzsensor oder UV/Vis-Sensor in der Transferstufe aufweist, der einen zweiten Parametersatz misst, wobei der Parametersatz ein Maß für eine zweite Konzentration an Mikroverunreinigungen umfasst, und einen dritten Fluoreszenzsensor oder UV/Vis-Sensor in dem Ablauf aufweist, der einen dritten Parametersatz misst, wobei der Parametersatz ein Maß für eine dritte Konzentration an Mikroverunreinigungen umfasst, und eine Regel- und Auswerteeinheit aufweist, die die Ozonung derart regelt, dass die Ozoneinspeisung in einem vorgewählten Verhältnis zu dem gemessenen Parameter erfolgt, wobei die Ozoneinspeisung so dosiert ist, dass der Quotient aus der Differenz der ersten Konzentration an Mikroverunreinigungen und der zweiten Konzentration an Mikroverunreinigungen im Verhältnis zu der ersten Konzentration an Mikroverunreinigungen zwischen einem vorgegebenen Minimalwert und einem vorgegebenen Maximalwert eingestellt ist.

Dabei ist es vorteilhaft, wenn das Maß für die Konzentration an Mikroverunreinigungen anhand wenigstens eines Wertes ausgewählt aus der Gruppe, die TOC, DOC und CSB umfasst, bestimmt ist.

Zudem kann vorgesehen sein, aus dem gemessenen Parametersatz in der Transferstufe und im Ablauf jeweils eine Konzentration an organischen Wasserinhaltstoffen zu bestimmen. Diese Konzentrationen werden dann vorzugsweise in der Regel- und Auswerteeinheit weiter verwertet, in dem die Differenz aus der Konzentration an organischen Wasserinhaltstoffen in der Transferstufe und der Konzentration an organischen Wasserinhaltstoffen im Ablauf berechnet wird und das Durchführen eines Reinigungsschritts für den biologischen Filter initiiert wird, wenn der Quotient aus der Differenz und der Konzentration an organischen Wasserinhaltstoffen in der Transferstufe einen vorgegebenen Mindestwert unterschreitet. So kann die Funktionsfähigkeit des Filters anhand der Änderung der Konzentration an organischen Wasserinhaltsstoffen überwacht werden.

Eine bevorzugte Ausführungsform der Erfindung wird nachfolgend anhand der Zeichnung näher erläutert.

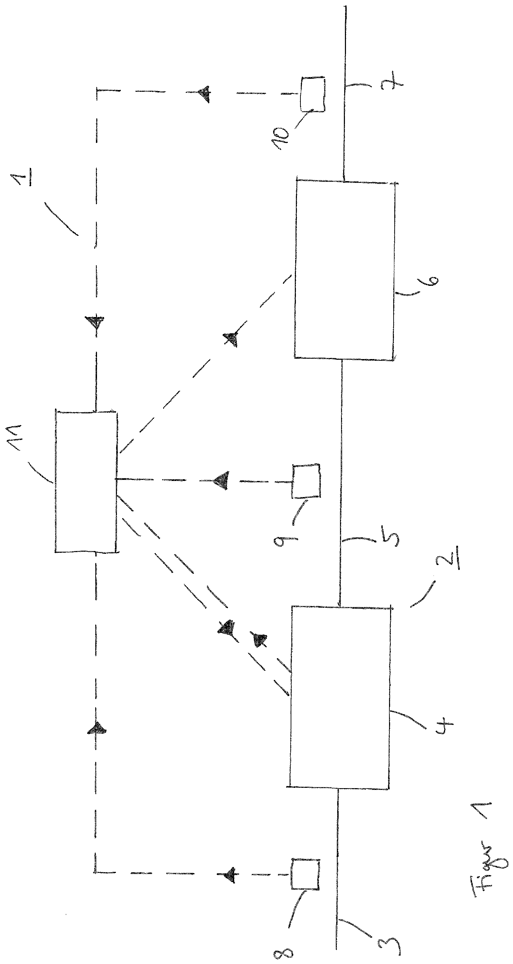

Figur 1 zeigt eine schematische Darstellung eines Regelkreises 1 einer Abwasserbehandlungsanlage 2 für kommunale Abwässer. Die Abwasserbehandlungsanlage 2 weist in Strömungsrichtung einen Zulauf 3, eine Ozonungsstufe 4, eine Transferstufe 5, einen biologischen Filter 6 und einen Ablauf 7 auf. Im Zulauf 3, in der Transferstufe 5 und im Ablauf 7 ist jeweils ein Sensor 8, 9, 10 vorgesehen. Die hier zur Verwendung kommenden Sensoren 8, 9, 10, die die spektrale Absorption von elektromagnetischer Strahlung im UV-Spektrum und/oder im sichtbaren Spektrum erfassen und damit besonders empfindlich für verschiedene Inhaltsstoffe des Abwassers sind, werden im Folgenden in Übereinstimmung mit dem technischen Sprachgebrauch auf diesem Gebiet "UV/Vis-Sensoren" genannt. Der UV/VIS Sensor nimmt simultan ein komplettes Absorptionsspektrum auf. Über eine mathematische Auswertung der Spektren kann eine Aussage über gängige Summenparameter wie TOC, CSB, DOC und spezifische Parameter wie Nitrit erhalten werden. Weiterhin ermöglicht die gezielte Spektren-Auswertung eine genauere Aussage über die erfolgten Reaktionen der organischen Wasserinhaltsstoffe mit Ozon und Radikalen. Von dieser Reaktion kann auf die Reaktion des Ozons mit den Mikroverunreinigungen geschlossen werden. Somit kann die Wirkungsweise des eingetragenen Ozons für die Regelung nach der vorliegenden Erfindung verfolgt werden.

Der im Zulauf 3 angeordnete erste UV/Vis-Sensor 8 ist dazu eingerichtet simultan 256 ausgewählte Wellenlängen im Spektrum von 200-700 nm zu erfassen. Daraus kann das Maß für eine erste Konzentration an Mikroverunreinigungen, die Summe der organischen Wasserinhaltsstoffe zum Beispiel in Form von TOC und die Nitritkonzentration des Wassers vor der Abwasserbehandlung bestimmt werden. Das aufgenommene Spektrum charakterisiert das zu behandelnde Wasser und erlaubt die Aussage einer Anfangsdosierung für die Ozonzugabe. Diese so ermittelte Ausgangssituation ist für jedes Wasser spezifisch und verändert sich bei Variationen der Wasserzusammensetzung im Laufe des Betriebs der Wasserbehandlungsanlage. Die gemessenen Werte werden an eine Auswerte- und Regelungseinheit 11 weitergegeben, die anhand von vorgegebenen Daten eine für die gemessene Wassermatrix geeignete Ozondosis bestimmt. Die berechnete Ozondosis wird an die Ozonungsstufe weitergegeben und der entsprechende Ozoneintrag veranlasst.

Das Ozon in der Ozonungsstufe reagiert im Wasser direkt mit einer Vielzahl anorganischer und organischer Substanzen. Ein Teil des Ozons zerfällt im Wasser in Gegenwart von organischem Kohlenstoff und Hydroxid-Ionen in Radikale, die sehr schnell mit verschiedenen Substanzen reagieren. Trotz ihrer kurzen Lebensdauer und der geringen Konzentration können sie substanziell zur Elimination von Mikroverunreinigungen beitragen. Vorhandenes Nitrit reagiert mit Ozon zu Nitrat. Ein hoher Nitritgehalt erhöht den Ozonbedarf und damit den Energieverbrauch und die Kosten. Entsprechend der gemessenen Nitritkonzentration im Zulauf muss daher die Ozonzufuhr erhöht werden, so dass sicher davon ausgegangen werden kann, dass genügend Ozon für die Elimination von Mikroverunreinigungen bzw. TOC zur Verfügung steht. In der Transferstufe 5 ist ein zweiter UV/Vis-Sensor 9 dazu eingerichtet das Absorptionsspektrum für die zuvor definierten Wellenlängen erneut nach der Ozonung 4 aufzunehmen. In der Auswerte- und Regelungseinheit 11 wird die Differenz zwischen den Absorptionsspektren vor und nach dem Ozoneintrag im Verhältnis zum Absorptionsspektrum im Zulauf ermittelt. Die gemessene Absorption für die jeweiligen Wellenlängen verändert sich aufgrund der Zugabe von Ozon ins Wasser. Mit der Erhöhung der Ozonzugabe verringern sich die Absorptions-Linien im Spektrum. Die Höhe der Reduzierung der Einzellinien für eine spezifische Ozondosierung ist unterschiedlich. Die beobachtete Veränderung des Linienspektrums spiegelt die unterschiedliche Reaktion des Ozons mit den Wasserinhaltsstoffen wieder. Diese Veränderung korreliert auch mit dem Abbau der Mikroverunreinigungen und kann daher in ein Maß für eine Änderung der Konzentration an Mikroverunreinigungen umgerechnet werden. Um die Korrelation zu bestimmen, wird vorher die Abhängigkeit der Änderung des Spektrums von der Änderung der Konzentration der Mikroverunreinigungen offline gemessen. Dieser Datensatz dient als Grundlage für das vorliegende Verfahren. Eine Möglichkeit ist es die Änderung der Konzentration der Mikroverunreinigungen in Abhängigkeit von TOC für den Datensatz zu bestimmen.

Die notwendige Ozonzugabe zur Erreichung des Behandlungsziels wird über die Veränderung des Absorptions-Spektrums verfolgt. Für ein bestimmtes Reinigungsziel wird die Ozondosierung so geregelt, dass eine vorgegebene Veränderung in % Reduzierung der Gesamtabsorption erreicht wird. Für leichter abbaubare Mikroverunreinigungen wie beispielsweise Carbamazepin und Diclofenac kann die maximale Reduzierung im Bereich einer Reduzierung von 20-60% der Absorption liegen. Für schwerer abbaubare Stoffe wie beispielsweise Benzotriazol kann dies im Bereich von 40-80% liegen. Eine Ozonzugabe zum Abbau von Mikroverunreinigungen ist nur sinnvoll bis zur Erreichung der maximalen Reduktion des abzubauenden Stoffes bzw. der Gesamtabsorption. Darüber hinaus erfolgt kein nennenswerter Spurenstoffabbau des abzubauenden Stoffes. Zur Einhaltung eines optimierten Ozonverbrauches ist es wichtig diesen Punkt nicht zu überfahren. Durch Variation der Ozondosierung kann dieser Wert in einem gewünschten Bereich eingestellt werden. Mit steigender Ozondosierung nähert sich die Differenz der Absorptionsspektren im Verhältnis zum Absorptionsspektrum im Zulauf etwa asymptotisch gegen die gewünschte Reduzierung an. Dabei ist eine optimale Ozondosierung erreicht, wenn die Elimination der Spurenstoffe in einem Bereich kurz vor dem Übergang in den asymptotischen Abschnitt liegt.

Nach der Transferstufe 5 gelangt das Wasser stromabwärts in die biologische Filteranlage 6. Die Filteranlage 6 hat mehrere Aufgaben zu erfüllen. Die mechanischen Filtereigenschaften führen zu dem Rückhalt von Trübstoffen und Partikeln. Aufgrund der spezifischen Betriebsweise des Systems arbeitet der Filter auch als ein Bioreaktor. Ein Bioreaktor weist Mikroorganismen auf, die unter möglichst optimalen Bedingungen kultiviert sind. Weiterhin wirken im Filter auch Adsorption-Effekte. Hierbei werden gelösten Wasserinhaltstoffe an die Filtermaterialien adsorbiert. Aufgrund dieser verschiedenen Filtereigenschaften trägt der Filter zum weitergehendem Abbau von organischen Wasserinhaltstoffen und anderen nicht erwünschten Nebenprodukten (z.B. NDMA) bei.

Der in der Transferstufe 5 angeordnete zweite UV/Vis-Sensor 9 misst das gesamte Absorptionsspektrum von 200-700 nm. Aus dem Spektrum wird der Ozongehalt im Wasser durch Analyse des UV-Absorptionsspektrum bei 220 - 350 nm bestimmt. Durch die Optimierung des bereits beschriebenen Teils des Regelkreises ist zu erwarten, dass die Ozondosis so gering ist, dass im Zulauf des Filterbettes kein gelöstes Ozon mehr vorhanden ist. Die gemessene Ozondosis wird an die Regel- und Auswerteeinheit 11 weitergegeben und dort verarbeitet. Ist die Ozondosis zu hoch, kann eine Anpassung des Ozoneintrags vorgenommen werden.

Für den Einsatz in der Filteranlage ist eine Vielzahl von verschiedenen Filtermaterialien mit unterschiedlichen Funktionen geeignet. Das Filterbett hält korpuskuläre Feststoffe zurück und lässt das Filtrat durch. Die vom Ozon in der Ozonung aufgespalteten organischen Substanzen werden von aeroben Bakterien im ozonfreien Milieu des Filterbetts weitestgehend mineralisiert. Für die biologische Mineralisierung werden in der Regel spezielle entsprechend dimensionierte Aktivkohlefilter bzw. Mehrschichtfilter eingesetzt.

Die Filterleistung der Filteranlage 6 kann mit der Zeit nachlassen, da der Filter zum Beispiel verstopft. Zur Reinigung des Filters wird dieser zum Beispiel mit Wasser frei gespült. Die Freispülung des Filters ist anwendungsspezifisch. Dabei ist eine modifizierte Spülung aus Luft, Luft und Wasser oder Wasser vorgesehen. Die Steuereinheit des Filters kann verschiedene Spülprogramme imitieren. Diese werden durch das Gesamt-Regelungskonzept vorgegeben.

Um unter Anderem die Leistung des Filters 6 zu überwachen ist im Ablauf 7 ein dritter UV/Vis-Sensor 10 vorgesehen. Der dritte UV/Vis-Sensor 10 misst die Konzentration an Spurenstoffen durch Aufnahme eines Absorptionsspektrums beispielsweise organischer Wasserinhaltstoffe nach dem biologischen Filter und gibt den Wert an die Regel- und Auswerteeinheit weiter. Dort wird die Differenz der Absorptionsspektren vor und nach dem Filter im Verhältnis zum Absorptionsspektrum in der Transferstufe ermittelt. Dieser Wert steht für die Effizienz des biologischen Filters. Sinkt die Effizienz unter einen bestimmten Wert, wird eine Reinigung des Filters veranlasst. Der Reinigungsschritt kann ein angepasstes Spülprogramm des Filters und/oder andere Reinigungsverfahren, wie zum Beispiel eine Veränderung der Ozonzufuhr umfassen. Für den Filterbetrieb wird typischerweise noch der Differenzdruck im Filterbett und das Vorhandensein von Trübstoffen und Partikeln in Form von TSS und NTU vor und hinter dem Filter kontrolliert.

Weiterhin wird das Absorptionsspektrum im Ablauf 7 mittels des dritten Sensors 10 überwacht. Die Auswerte- und Regeleinheit 11 vergleicht hier die aus dem Spektrum ermittelte Konzentration zum Beispiel an organischen Wasserinhaltstoffen in Form von TOC mit einem vorgegebenen Sollbereich und kann bei einer zu hohen Konzentration zum Beispiel die Ozonzufuhr in der Ozonungsstufe erhöhen.

Es kann auch vorgesehen sein Fluoreszenzsensoren einzusetzen, um wenigstens einen Teil der Parameter zu messen.

In Sonderfällen, insbesondere bei der Trinkwasseraufbereitung, kann es notwendig sein, zusätzlich zu dem Ozon eine aktivierende Chemikalie wie beispielsweise H₂O₂ zu dosieren. Die Zudosierung von z.B. H₂O₂ würde im Regelkonzept folgendermaßen umgesetzt: Eine optionale H₂O₂ Dosierung kann im Programm zugeschaltet werden. Die notwendige H₂O₂ Dosiermenge wird durch das Programm an die ermittelt Ozonmenge über ein vorgegebenes Verhältnis Ozon/ H₂O₂ angepasst. Da im Ablauf kein H₂O₂ erwünscht ist sind Kontrollmessungen in der Transferstufe 5 und im Ablauf des Filters vorgesehen.

Das Verfahren und die Vorrichtung zur Regelung lassen sich auch für die Aufbereitung von Trinkwasser mit Ozon-Biofiltration einsetzen.

Die erfindungsgemäße Regelung der Wasserbehandlungsanlage dient der Kostenoptimierung aber auch der Verfahrens- und Betriebssicherheit. Die Wasserbehandlungsanlage kann mit der erfindungsgemäßen Regelung Matrixschwankungen ausgleichen, potentielle Ozonüberdosierung vermeiden, die Effizienz des biologischen Filters überwachen und das Durchschlagen von Ozon in den Ablauf verhindern. Dabei kann durch die Regelung der optimale Betriebspunkt der Anlage eingestellt werden, so dass möglichst kostengünstig die gewünschte Wasserqualität erreicht wird. Ohne ein solches Regelungskonzept werden in der Praxis oft aus Sicherheitsgründen mehr Betriebsmittel eingesetzt (z.B. Ozonmenge) als notwendig. Für einen Betreiber steht in der Praxis die Erreichung des Reinigungszieles an erster Stelle. Um dies sicher zu erreichen wird dann ohne die Kenntnis des Reinigungsvorganges in der Regel überdosiert, was zu erhöhten Betriebskosten führt. Das neu entwickelte Regelungskonzept kann dazu beitragen bis zu 50% der Betriebskosten einzusparen.

Die erfindungsgemäße Regelung erlaubt eine gezielte Dosierung der Ozonmenge, um eine bestimmte Reinigungswirkung zu erreichen. Die Reinigungswirkung kann sich auf den Abbau von Spurenstoffen und auch auf die Erreichung anderer Reinigungsziele wie Desinfektion beziehen. Weiterhin ermöglicht diese Art von Kontrolle der Ozondosierung auch eine Kontrolle der Entstehung von unerwünschten Nebenprodukten wie beispielsweise Bromat.

## Patentansprüche

1. Verfahren zur Regelung einer Wasserbehandlungsanlage (2) aufweisend in Strömungsrichtung einen Zulauf (3), eine Ozonungsstufe (4), eine Transferstufe (5), wenigstens einen biologischen Filter (6) und einen Ablauf (7), mit folgenden Verfahrensschritten:
1.1. Messen eines ersten Parametersatzes in dem Zulauf (3) mittels eines Fluoreszenzsensors (8) oder UV/Vis-Sensors (8), wobei anhand des ersten Parametersatzes ein Maß für eine erste Konzentration an Mikroverunreinigungen (c1) und/oder eine Nitritkonzentration (n1) bestimmt wird;
1.2. Steuern der Ozonungsstufe (4) derart, dass eine Ozoneinspeisung in einem vorgewählten Verhältnis zu dem gemessenen ersten Parametersatz (c1, n1) erfolgt;
1.3. Messen eines zweiten Parametersatzes in der Transferstufe (5) mittels eines Fluoreszenzsensors (9) oder UV/Vis-Sensors (9), wobei anhand des zweiten Parametersatzes ein Maß für eine zweite Konzentration an Mikroverunreinigungen (c2) bestimmt wird;
1.4. Regeln der Ozonung derart, dass sich der Quotient (c1- c2)/ c1 aus der Differenz der ersten Konzentration an Mikroverunreinigungen (c1) und der zweiten Konzentration an Mikroverunreinigungen (c2) im Verhältnis zu der ersten Konzentration an Mikroverunreinigungen (c1) zwischen einem vorgegebenen Minimalwert und einem vorgegebenen Maximalwert einstellt;
1.5. Messen eines dritten Parametersatzes in dem Ablauf (7) mittels eines Fluoreszenzsensors (10) oder UV/Vis-Sensors (10), wobei anhand des dritten Parametersatzes ein Maß für eine dritte Konzentration an Mikroverunreinigungen (c3) bestimmt wird;
1.6. Wenn der dritte das Maß für die Konzentration an Mikroverunreinigungen (c3) umfassende Parametersatz im Ablauf (7) einen vorgegebenen Maximalwert überschreitet, Erhöhen der Ozonzufuhr im Schritt 1.2;

2. Verfahren nach Anspruch 1, **dadurch gekennzeichnet, dass** anhand des zweiten und dritten Parametersatzes jeweils eine Konzentration an organischen Wasserinhaltstoffen (c4, c5) bestimmt wird, aus denen die Differenz delta (c4, c5) als Differenz aus c4 in der Transferstufe und c5 im Ablauf berechnet wird, wobei ein Reinigungsschritt für den biologischen Filter durchgeführt wird, wenn der Quotient delta (c4,c5) / (c4) einen vorgegebenen Mindestwert unterschreitet.

3. Verfahren nach Anspruch 1 oder 2, **dadurch gekennzeichnet, dass** die Sensoren (8, 9, 10) UV/Vis-Sensoren sind, die als Parametersatz ein UV/Vis-Absorptionsspektrum aufnehmen.

4. Verfahren nach Anspruch 3, **dadurch gekennzeichnet, dass** der Parametersatz das UV/Vis-Absorptionsspektrum im Bereich von 200-700 nm umfasst.

5. Verfahren nach einem der vorhergehenden Ansprüche, **dadurch gekennzeichnet, dass** im Schritt 1.1 die Nitritkonzentration (n1) gemessen wird und dass die Ozonung (4) so gesteuert wird, dass dem Abwasserstrom in der Ozonung (4) wenigstens eine der Nitritmenge entsprechende Ozonmenge im Verhältnis 1:1 zugegeben wird.

6. Verfahren nach einem der Ansprüche 2 bis 5, **dadurch gekennzeichnet, dass** die Konzentration an organischen Wasserinhaltstoffen (c4, c5) als TOC-Wert gemessen wird.

7. Verfahren nach einem der vorhergehenden Ansprüche, **dadurch gekennzeichnet, dass** anhand des zweiten Parametersatzes die gelöste Ozonmenge im Wasser bestimmt wird, wobei die Ozonzufuhr im Schritt 1.2 reduziert wird, wenn die gelöste Ozonmenge einen vorgegebenen Maximalwert überschreitet.

8. Verfahren nach einem der vorhergehenden Ansprüche, **dadurch gekennzeichnet, dass** das Maß für die Konzentration an Mikroverunreinigungen (c1, c2, c3) anhand wenigstens eines Wertes ausgewählt aus der Gruppe, die TOC, DOC und CSB umfasst, bestimmt wird.

9. Verfahren nach einem der vorhergehenden Ansprüche, **dadurch gekennzeichnet, dass** es sich bei der Wasserbehandlungsanlage um eine Abwasserbehandlungsanlage für kommunale Abwässer handelt.

10. Vorrichtung zur Regelung einer Wasserbehandlungsanlage (2) aufweisend in Strömungsrichtung einen Zulauf (3), eine Ozonungsstufe (4), eine Transferstufe (5), wenigstens einen biologischen Filter (6) und einen Ablauf (7), **dadurch gekennzeichnet, dass** die Vorrichtung einen ersten Fluoreszenzsensor (8) oder UV/Vis-Sensor (8) in dem Zulauf (3) aufweist, der einen ersten Parametersatz misst, wobei der erste Parametersatz ein Maß für eine erste Konzentration an Mikroverunreinigungen (c1) und/oder eine Nitritkonzentration (n1) umfasst, und
einen zweiten Fluoreszenzsensor (9) oder UV/Vis-Sensor (9) in der Transferstufe (5) aufweist, der einen zweiten Parametersatz misst, wobei der Parametersatz ein Maß für eine zweite Konzentration an Mikroverunreinigungen (c2) umfasst, und
einen dritten Fluoreszenzsensor (10) oder UV/Vis-Sensor (10) in dem Ablauf (7) aufweist, der einen dritten Parametersatz misst, wobei der Parametersatz ein Maß für eine dritte Konzentration an Mikroverunreinigungen (c3) umfasst, und
eine Regel- und Auswerteeinheit (11) aufweist, die derart ausgelegt ist, dass die Ozoneinspeisung in einem vorgewählten Verhältnis zu dem gemessenen Parameter (c1, n1) regelbar ist, wobei die Ozoneinspeisung so dosiert ist, dass der Quotient ((c1- c2)/(c1)) aus der Differenz der ersten Konzentration an Mikroverunreinigungen (c1) und der zweiten Konzentration an Mikroverunreinigungen (c2) im Verhältnis zu der ersten Konzentration an Mikroverunreinigungen (c1) zwischen einem vorgegebenen Minimalwert und einem vorgegebenen Maximalwert einstellbar ist.

11. Vorrichtung nach Anspruch 10, **dadurch gekennzeichnet, dass** das Maß für die Konzentration an Mikroverunreinigungen (c1, c2, c3) anhand wenigstens eines Wertes ausgewählt aus der Gruppe, die TOC, DOC und CSB umfasst, bestimmt ist.

12. Vorrichtung nach Anspruch 10 oder 11, **dadurch gekennzeichnet, dass** aus dem gemessenen Parametersatz in der Transferstufe (5) und im Ablauf (7) jeweils eine Konzentration an organischen Wasserinhaltstoffen (c4, c5) bestimmt ist.

13. Vorrichtung nach Anspruch 12, **dadurch gekennzeichnet, dass** die Regel- und Auswerteeinheit (11) die Differenz (c4,c5) aus der Konzentration an organischen Wasserinhaltstoffen (c4) in der Transferstufe und der Konzentration an organischen Wasserinhaltstoffen (c5) im Ablauf berechnet und das Durchführen eines Reinigungsschritts für den biologischen Filter initiiert, wenn der Quotient aus der Differenz (c4,c5) und der Konzentration an organischen Wasserinhaltstoffen (c4) in der Transferstufe (5) einen vorgegebenen Mindestwert unterschreitet.

## Claims

1. Method for controlling a water treatment installation (2) having, in a flow direction, a supply (3), an ozonisation stage (4), a transfer stage (5), at least one biological filter (6) and a discharge (7) having the following method steps:
1.1. measuring a first parameter set in the supply (3) by means of a fluorescence sensor (8) or UV/Vis sensor (8), wherein, with reference to the first parameter set, a measurement for a first concentration of micro-contaminations (c1) and/or a nitrite concentration (n1) is determined;
1.2. controlling the ozonisation stage (4) in such a manner that an ozone supply is carried out in a preselected ratio to the measured first parameter set (c1, n1);
1.3. measuring a second parameter set in the transfer stage (5) by means of a fluorescence sensor (9) or UV-Vis sensor (9), wherein, with reference to the second parameter set, a measurement for a second concentration of micro-contaminations (c2) is determined;
1.4. controlling the ozonisation in such a manner that the quotient (c1-c2)/c1 is produced from the difference of the first concentration of micro-contaminations (c1) and the second concentration of micro-contaminations (c2) in relation to the first concentration of micro-contaminations (c1) between a predetermined minimum value and a predetermined maximum value;
1.5. measuring a third parameter set in the discharge (7) by means of a fluorescence sensor (10) or UV/Vis sensor (10), wherein, with reference to the third parameter set, a measurement for a third concentration of micro-contaminations (c3) is determined;
1.6. if the third parameter set which comprises the measurement for the concentration of micro-contaminations (c3) exceeds a predetermined maximum value in the discharge (7), increasing the ozone supply in step 1.2.

2. Method according to Claim 1, **characterised in that**, with reference to the second and third parameter set, there is determined in each case a concentration of organic water contents (c4, c5) from which the difference delta (c4, c5) is calculated as the difference from c4 in the transfer stage and c5 in the discharge, wherein a cleaning step for the biological filter is carried out if the quotient delta (c4, c5)/(c4) falls below a predetermined minimum value.

3. Method according to Claim 1 or 2, **characterised in that** the sensors (8, 9, 10) are UV/Vis sensors which absorb as a parameter set a UV/Vis absorption spectrum.

4. Method according to Claim 3, **characterised in that** the parameter set comprises the UV/Vis absorption spectrum in the range from 200 to 700 nm.

5. Method according to any one of the preceding claims, **characterised in that**, in step 1.1, the nitrite concentration (n1) is measured and **in that** the ozonisation (4) is controlled in such a manner that there is supplied to the waste water flow in the ozonisation (4) at least a quantity of ozone which corresponds to the quantity of nitrite in a ratio of 1:1.

6. Method according to any one of Claims 2 to 5, **characterised in that** the concentration of organic water contents (c4, c5) is measured as a TOC value.

7. Method according to any one of the preceding claims, **characterised in that**, with reference to the second parameter set, the dissolved quantity of ozone in the water is determined, wherein the ozone supply is reduced in step 1.2 if the dissolved quantity of ozone exceeds a predetermined maximum value.

8. Method according to any one of the preceding claims, **characterised in that** the measurement for the concentration of micro-contaminations (c1, c2, c3) is determined with reference to at least one value selected from the group which comprises TOC, DOC and COD.

9. Method according to any one of the preceding claims, **characterised in that** the water treatment installation is a waste water treatment installation for communal waste water.

10. Device for controlling a water treatment installation (2) having, in the flow direction, a supply (3), an ozonisation stage (4), a transfer stage (5), at least one biological filter (6) and a discharge (7), **characterised in that** the device has in the supply (3) a first fluorescence sensor (8) or UV/Vis sensor (8) which measures a first parameter set, wherein the first parameter set comprises a measurement for a first concentration of micro-contaminations (c1) and/or a nitrite concentration (n1) and
has in the transfer stage (5) a second fluorescence sensor (9) or UV/Vis sensor (9) which measures a second parameter set, wherein the parameter set comprises a measurement for a second concentration of micro-contaminations (c2), and
has in the discharge (7) a third fluorescence sensor (10) or UV/Vis sensor (10) which measures a third parameter set, wherein the parameter set comprises a measurement for a third concentration of micro-contaminations (c3) and
has a control and evaluation unit (11) which is designed in such a manner that the ozone supply is controllable in a pre-selected ratio to the measured parameter (c1, n1), wherein the ozone supply is metered in such a manner that the quotient ((c1-c2)/(c1)) of the difference of the first concentration of micro-contaminations (c1) and the second concentration of micro-contaminations (c2) in relation to the first concentration of micro-contaminations (c1) is adjustable between a predetermined minimum value and a predetermined maximum value.

11. Device according to Claim 10, **characterised in that** the measurement for the concentration of micro-contaminations (c1, c2, c3) is determined on the basis of at least one value selected from the group which comprises TOC, DOC and COD.

12. Device according to Claim 10 or 11, **characterised in that** a concentration of organic water contents (c4, c5) is determined in each case from the measured parameter set in the transfer stage (5) and in the discharge (7).

13. Device according to claim 12, **characterised in that** the control and evaluation unit (11) calculates the difference (c4, c5) from the concentration of organic water contents (c4) in the transfer stage and the concentration of organic water contents (c5) in the discharge and initiates the implementation of a cleaning step for the biological filter if the quotient of the difference (c4, c5) and the concentration of organic water contents (c4) in the transfer stage (5) falls below a predetermined minimum value.

## Revendications

1. Procédé de réglage d'une installation de traitement d'eau (2) présentant, dans la direction d'écoulement, une arrivée (3), un étage d'ozonation (4), un étage de transfert (5), au moins un filtre biologique (6) et un écoulement (7), avec les étapes de procédé suivantes :
1.1. Mesure d'un premier ensemble de paramètres dans l'arrivée (3) à l'aide d'un capteur de fluorescence (8) ou capteur UV/Vis (8), où l'on détermine, au moyen du premier ensemble de paramètres, une mesure pour une première concentration en micropolluants (c1) et/ou une concentration en nitrite (n1) ;
1.2. Commande d'un étage d'ozonation (4) de sorte à obtenir une alimentation en ozone selon un rapport prédéterminé par rapport au premier ensemble de paramètres mesurés (c1, n1);
1.3. Mesure d'un deuxième ensemble de paramètres dans l'étape de transfert (5) à l'aide d'un capteur de fluorescence (9) ou capteur UV/Vis (9), où l'on détermine, au moyen du deuxième ensemble de paramètres, une mesure pour une deuxième concentration en micropolluants (c2) ;
1.4. Réglage de l'ozonation de telle sorte que le ratio (c1 - c2)/c1, résultant de la différence de la première concentration en micropolluants (c1) et de la deuxième concentration en micropolluants (c2), se situe, par rapport à la première concentration en micropolluants (c1), entre un valeur minimale prédéterminée et une valeur maximale prédéterminée ;
1.5. Mesure d'un troisième ensemble de paramètres dans l'écoulement (7) à l'aide d'un capteur de fluorescence (10) ou capteur UV/Vis (10), où l'on détermine, au moyen du troisième ensemble de paramètres, une mesure pour une troisième concentration en micropolluants (c3) ;
1.6. Lorsque le troisième ensemble de paramètres comportant la mesure pour la concentration en micropolluants (c3) dépasse, dans l'écoulement (7), une valeur maximale prédéterminée, augmentation de l'alimentation en ozone dans l'étape 1.2.

2. Procédé selon la revendication 1, **caractérisé en ce que** l'on détermine, au moyen du deuxième et troisième ensemble de paramètres, respectivement une concentration de composants organiques contenus dans l'eau (c4, c5), à partir desquels la différence delta (c4, c5) est calculée en tant que différence à partir de c4 dans l'étage de transfert et c5 dans l'écoulement, où l'on exécute une étape de nettoyage pour le filtre biologique, lorsque le ratio delta (c4, c5)/(c4) dépasse vers le bas une valeur minimale prédéterminée.

3. Procédé selon la revendication 1 ou 2, **caractérisé en ce que** les capteurs (8, 9, 10) sont des capteurs UV/Vis qui enregistrent, en tant qu'ensemble de paramètres, un spectre d'absorption UV/Vis.

4. Procédé selon la revendication 3, **caractérisé en ce que** l'ensemble de paramètres comporte le spectre d'absorption UV/Vis dans la gamme de 200-700 nm.

5. Procédé selon l'une des revendications précédentes, **caractérisé en ce que** l'on mesure, dans l'étape 1.1, la concentration en nitrite (n1) et **en ce que** l'ozonation (4) est commandée de sorte à ajouter au courant d'eaux usées dans l'ozonation (4) au moins une quantité d'ozone correspondant à la quantité de nitrite dans un rapport 1:1.

6. Procédé selon l'une des revendications 2 à 5, **caractérisé en ce que** l'on mesure la concentration de composants organiques contenus dans l'eau (c4, c5) en tant que valeur TOC.

7. Procédé selon l'une des revendications précédentes, **caractérisé en ce que** l'on détermine, au moyen du deuxième ensemble de paramètres, la quantité d'ozone dissoute dans l'eau, où l'alimentation en ozone est réduite dans l'étape 1.2 lorsque la quantité d'ozone dissoute dépasse une valeur maximale prédéterminée.

8. Procédé selon l'une des revendications précédentes, **caractérisé en ce que** l'on détermine la mesure pour la concentration en micropolluants (c1, c2, c3) au moyen d'au moins une valeur sélectionnée à partir du groupe contenant TOC, DOC et CSB.

9. Procédé selon l'une des revendications précédentes, **caractérisé en ce qu'**il s'agit, dans le cas de l'installation de traitement d'eau, d'une installation de traitement des eaux usées pour les eaux usées communales.

10. Dispositif de réglage d'une installation de traitement d'eau (2) présentant, dans la direction d'écoulement, une arrivée (3), un étage d'ozonation (4), un étage de transfert (5), au moins un filtre biologique (6) et un écoulement (7), **caractérisé en ce que** le dispositif présente un premier capteur de fluorescence (8) ou capteur UV/Vis (8) dans l'arrivée (3) qui mesure un premier ensemble de paramètres, où le premier ensemble de paramètres comporte une mesure pour une première concentration en micropolluants (c1) et/ou une concentration en nitrite (n1), et
présente un deuxième capteur de fluorescence (9) ou capteur UV/Vis (9) dans l'étage de transfert (5) qui mesure un deuxième ensemble de paramètres, où l'ensemble de paramètres comporte une mesure pour une deuxième concentration en micropolluants (c2), et
présente un troisième capteur de fluorescence (10) ou capteur UV/Vis (10) dans l'écoulement (7) qui mesure un troisième ensemble de paramètres, où l'ensemble de paramètres comporte une mesure pour une troisième concentration en micropolluants (c3), et
présente une unité de réglage et d'évaluation (11) qui est conçue de sorte que l'alimentation en ozone puisse être réglée dans une rapport présélectionné par rapport au paramètre mesuré (c1, n1), où l'alimentation en ozone est dosée de telle sorte que le ratio ((c1 - c2)/(cl)) provenant de la différence de la première concentration en micropolluants (c1) et de la deuxième concentration en micropolluants (c2) puisse être réglé, par rapport à la première concentration en micropolluants (c1), entre une valeur minimale prédéterminée et une valeur maximale prédéterminée.

11. Dispositif selon la revendication 10, **caractérisé en ce que** l'on détermine la mesure pour la concentration en micropolluants (c1, c2, c3) au moyen d'au moins une valeur sélectionnée à partir du groupe contenant TOC, DOC et CSB.

12. Dispositif selon la revendication 10 ou 11, **caractérisé en ce que** l'on détermine à partir de l'ensemble de paramètres mesurés dans l'étape de transfert (5) et dans l'écoulement (7) respectivement une concentration de composants organiques contenus dans l'eau (c4, c5).

13. Dispositif selon la revendication 12, **caractérisé en ce que** l'unité de réglage et d'évaluation (11) calcule la différence (c4, c5) à partir de la concentration de composants organiques contenus dans l'eau (c4) dans l'étage de transfert et de la concentration de composants organiques contenus dans l'eau (c5) dans l'écoulement et initie l'exécution d'une étape de nettoyage pour le filtre biologique lorsque le ratio résultant de la différence (c4, c5) et de la concentration de composants organiques contenus dans l'eau (c4) dépasse vers le bas, dans l'étape de transfert (5), une valeur minimale prédéterminée.
